# EUROPEAN PATENT SPECIFICATION

(11) **EP 2 910 111 B1**
(45) Date of publication and mention of the grant of the patent: **04.10.2017**
(21) Application number: 15156543.9
(22) Date of filing: 25.02.2015
(51) Int. Cl.: A01G 13/02

(54) **Canopy for protecting plants against water, hail and insects**
Überdachung zum Schutz von Pflanzen gegen Wasser, Hagel und Insekten
Auvent pour protéger des plantes contre l'eau, la grêle et les insectes

(30) Priority: 25.02.2014 IT MI20140279
(43) Date of publication of application: 26.08.2015
(73) Proprietor: Tessitura Boscato S.r.l., 36015 Schio (IT); Tonioni, Mario, 52100 Arezzo (IT)
(72) Inventor: Tonioni, Mario, 52100 Arezzo (IT); Boscato, Maurizio, 36014 Santorso VI (IT)
(74) Representative: Modiano, Micaela Nadia

(56) References cited:
- EP-A1- 1 203 526
- FR-A1- 2 898 616
- TW-U- M 306 764
- US-A1- 2001 045 055
- US-A1- 2005 144 836

## Description

The present invention relates to a canopy for protecting plants against water, hail and insects.

Many and varied types of systems are known for the protection of plants against hail and against insects. Such systems generally use net canopies that are arranged above the plants so as to offer the required protection. Among the several types of system that are currently available on the market, systems are known which are constituted by net canopies that are stretched horizontally to cover the area to be protected, or systems of the single-row type i.e. which use net canopies arranged across one swath or row of plants to be protected.

These types of system have been shown to be effective in the protection of plants against hail and insects, but they are entirely ineffective in offering protection against water for crops that can be damaged by downpours of rain and by contact with water in general. For example, for cherries, and also for other types of fruits, downpours of rain on the fruits cause the accumulation of water in the hollow where the stem is joined to the fruit. This stagnation of water, which is progressively absorbed by the fruit, can cause the fruit to break off. EP 1 203 526 A1 discloses such a type of canopy.

In order to try to solve this problem, canopies have been used which are constituted by plastic waterproof films and arranged in a hut-like manner above the plants. These canopies evidently preserve the fruits from contact with the rain, but they present the drawback of preventing the transpiration of the plants, resulting in other types of problems such as anomalous overheating of the plants, the development of excessive humidity levels and the possible formation of condensation.

The aim of the present invention is to solve the above mentioned drawback, by providing a canopy that offers effective protection to plants not only against hail and insects, but also against water, while at the same time maintaining optimal conditions for the plants.

Within this aim, an object of the invention is to provide a canopy that, although protecting the plants from rain, allows the normal transpiration of the plants and the circulation of air.

Another object of the invention is to provide a canopy that can be made with conventional production systems.

A further object of the invention is to provide a canopy that is long-lasting and which is low cost.

This aim and these and other objects which will become better apparent hereinafter are achieved by a canopy for protecting plants against water, hail and insects, characterized in that it comprises at least one first band, with a water-resistant protective function, composed of at least two micro-perforated layers, which are superimposed and separate from each other.

Further characteristics and advantages of the invention will become better apparent from the description of a preferred, but not exclusive, embodiment of the canopy according to the invention, which is illustrated by way of non-limiting example in the accompanying drawings wherein:
Figure 1 is a perspective view of a portion of a canopy according to the invention;
Figure 2 is a perspective view of a portion of a canopy according to the invention, adapted for use in a system of the single-row type;
Figure 3 is a perspective view of a section of a single-row system that uses a canopy according to the invention, with the canopy in the extended position to protect the plants of the row;
Figure 4 is an enlarged detail of Figure 3;
Figure 5 is a cross-sectional view of the same section of single-row system seen from the front, with the canopy in the extended position to protect the plants of the row;
Figure 6 is a perspective view of a section of a single-row system that uses a canopy according to the invention, with the canopy in the gathered position in order to allow access to the plants;
Figure 7 is a sectional view of the same section of the single-row system in Figure 6, seen from the front, with the canopy in the gathered position in order to allow access to the plants;
Figure 8 is an enlarged detail of Figure 7;
Figure 9 is a sectional view of the same section of the single-row system in Figure 6, seen from the front, with one flap of the canopy in the extended position to protect the plants and with another flap of the canopy in the gathered position in order to allow access to the plants on one side.

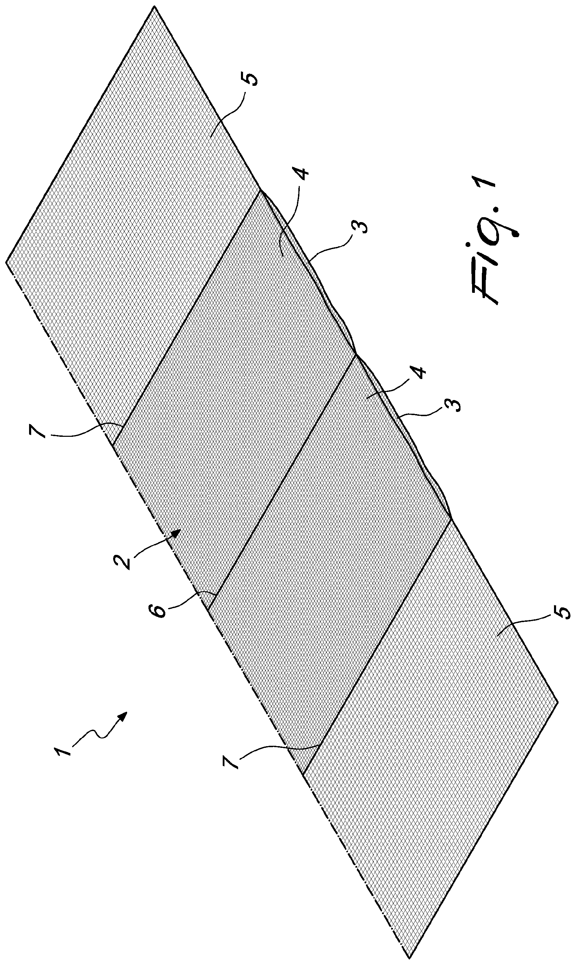

With reference to Figure 1, the canopy according to the invention, generally designated by the reference numeral 1, comprises at least one first band 2, with a water-resistant protective function, which is composed of at least two micro-perforated layers 3, 4 which are superimposed and separate from each other.

The expression "separate from each other" is used to mean that the two layers 3, 4 do not adhere to each other, but are kept free from each other for most of their extension in order to better perform the water-resistant function, as will be better explained below. This does not rule out the possibility of the two layers 3, 4 being mutually joined along lines or areas that are mutually spaced apart, such as for example at their perimetric sides and/or in intermediate areas.

The two layers 3, 4 that make up the first band 2 are each constituted by a mesh fabric made of synthetic material which has meshes that are fine enough to block the passage of water, but are adapted to allow the passage of air and of water vapor.

Preferably, the two layers 3, 4 of mesh fabric of the first band 2 have at least 18 warp threads per centimeter and at least 8 weft threads per centimeter. The two layers 3, 4 of the first band 2 are made up of threads that preferably have a diameter comprised substantially between 0.15 mm and 0.30 mm.

The canopy according to the invention also comprises at least one second band 5 which is connected, for example by way of stitching, to at least one side of the first band 2. The second band 5 is constituted by a mesh fabric that has larger meshes than those of the layers 3, 4 that make up the first band 2. The function of this second band 5 is to protect the plants from insects and thus it will have meshes that are suitably sized according to the insects to be kept out.

According to production requirements and/or the type of system on which it is to be used, the canopy according to the invention can have a second band 5 which is connected to one side of the first band 2, or it can have two second bands 5 which are connected to two opposite sides of the first band 2.

Optionally, in the first case, two canopies made up of a first band 2 and of a second band 5 can be joined, along the opposite side of the first band 2 with respect to the second band 5, in order to still obtain a canopy with two second bands 5 with an interposed first band 2 made up of the two layers 3, 4.

In the embodiment shown, the canopy 1 has two second bands 5 and a first band 2 which is arranged between the two second bands 5. The two layers 3, 4 that make up the first band 2 are mutually joined along a central line 6, which is constituted for example by a line of stitches. The two layers 3, 4 of the first band 2 are further joined together and to the two second bands 5 along another two lines 7, which are constituted for example by two lines of stitches.

Evidently, the first band 2, in addition to performing a water-resistant function, given the fineness of its meshes, is also capable of performing a hail-resistant and insect-resistant function.

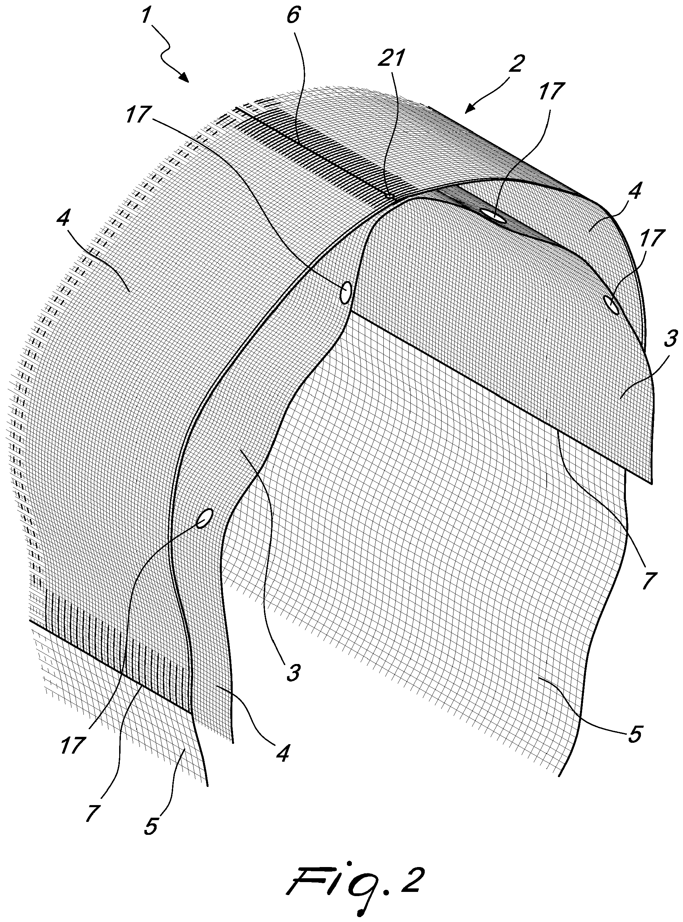

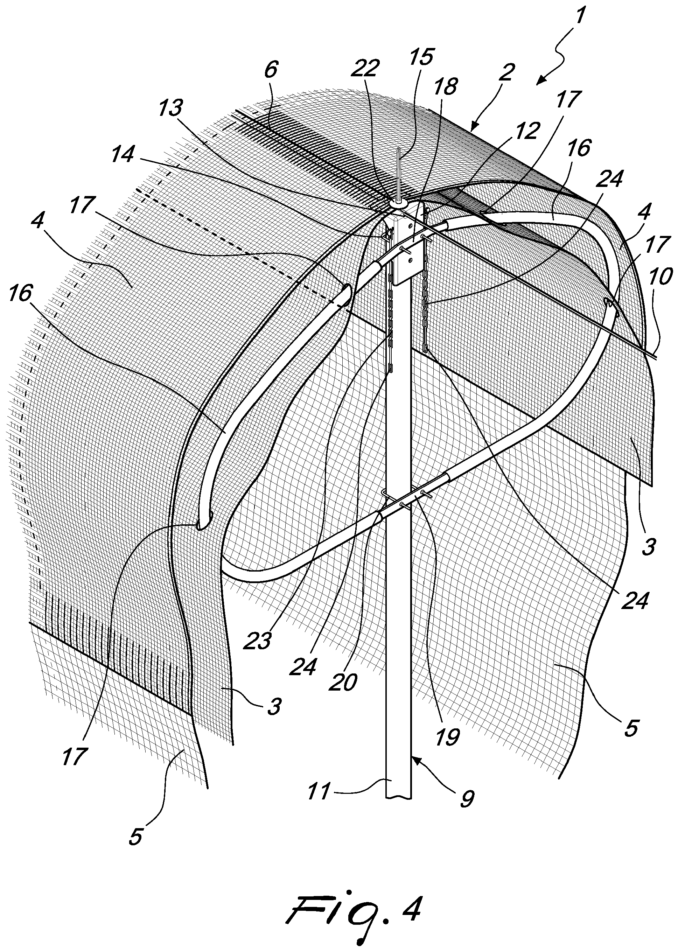

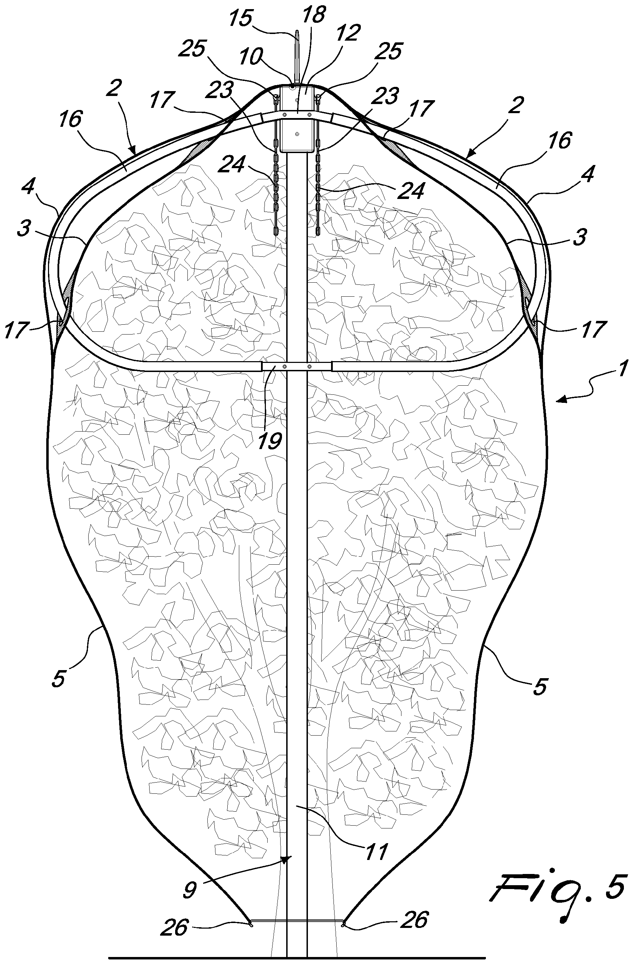

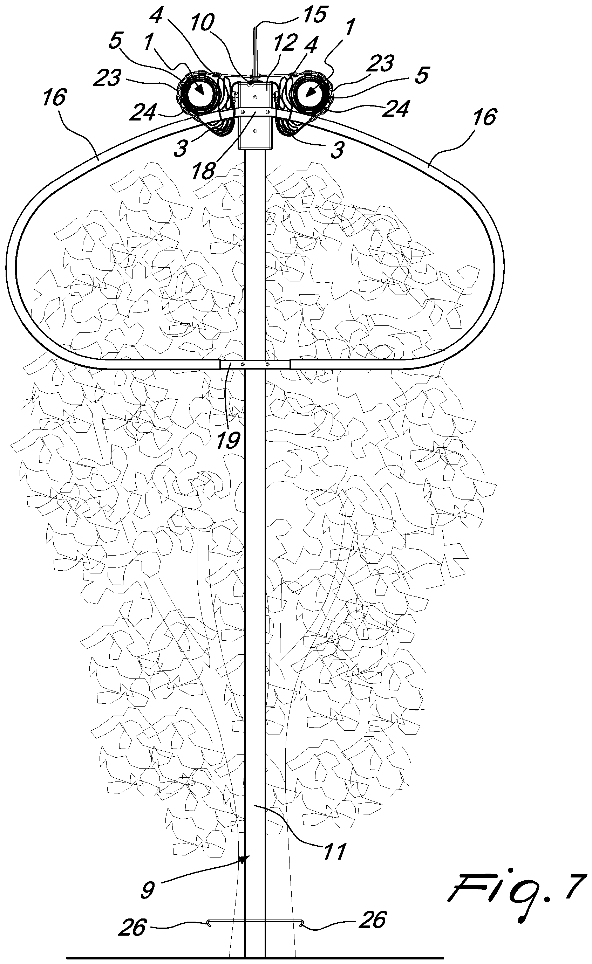

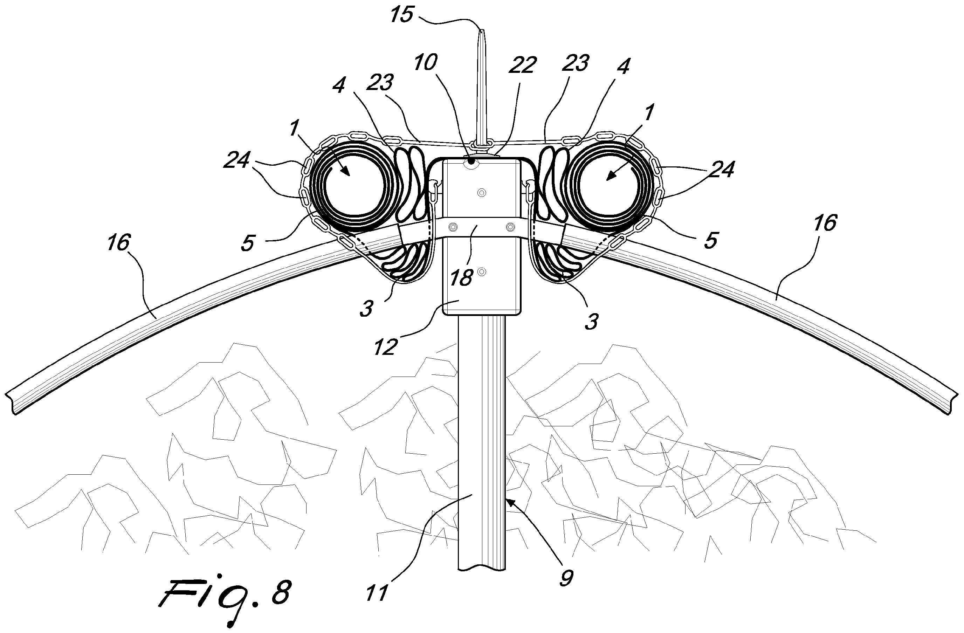

Figures 2 to 9 show, merely for the purposes of non-limiting example, the use of the canopy 1 according to the invention in a protection system of the single-row type.

The system shown, which is described for the sole purpose of better clarifying the use and operation of the canopy 1 according to the invention and which should not be taken to be a limiting example of use of the canopy 1 according to the invention, comprises a supporting structure 8 that is composed of poles 9 that are aligned along the row of plants to be protected and of a top wire 10 that is tensioned between the poles 9. The canopy 1 is arranged on the top wire 10 with the central line 6 of the first band 2 and can be unrolled downward on the two sides of the row of plants.

More specifically, the poles 9 are composed of a body 11 of wood or concrete and have, at the end upper of their body 11, a plate 12 that covers the upper end of the body 11 of the corresponding pole 9 and is provided with a channel 13 for the passage of the top wire 10. The plate 12 can be fixed to the corresponding pole 9 by way of screws, not shown for the sake of simplicity, and by way of a U bolt 14.

Each pole 9 is completed by a spike 15 which is screwed, with its lower end, to the plate 12.

Conveniently, the system can comprise means for spacing apart the two layers 3, 4 of the first band 2 in order to keep the two layers 3, 4 detached from each other in the area comprised between the lines 6 and 7.

Such spacing means comprise, for each side of the row of plants and for each pole 9, a spacer arm 16 which is arc-shaped and is fixed, with its upper end, to the corresponding pole 9 proximate to the top of the pole 9. The spacer arm 16 extends toward the end lower of the corresponding pole 9 and is inserted between the two layers 3, 4 of the first band 2.

More specifically, the canopy 1 according to the invention is fixed to each pole 9 above the spacer arms 16 and each spacer arm 16 passes through two previously-made holes 17 in the inner layer 3 of the two layers 3, 4 of the first band 2, which is situated below the other layer 4. In this manner, each spacer arm 16, proximate to its upper end, passes between the two layers 3, 4 and protrudes inward proximate to the lower end of the inner layer 3 of the first band 2.

In substance, for each pole 9, there are two spacer arms 16, one for each side of the row of plants, which are fixed to the corresponding pole 9 by way of an upper bracket 18 that can be fixed using the same U bolt 14 that also retains the plate 12 and by way of a lower bracket 19 that is fixed to an intermediate region of the body 11 of the corresponding pole 9 by way of another U bolt 20.

The spacer arms 16 can be provided, as illustrated, so as to be connected to the corresponding pole 9 both with their upper end and with their lower end. In this case, each spacer arm 16 can be constituted by a tubular body that is curved and fitted, with its opposing ends, over one end of the upper bracket 18 and over one end of the lower bracket 19.

Alternatively, the spacer arms 16 can be provided so that their lower ends are free and spaced apart from the corresponding pole 9. This second version of the spacer arms 16 allows an easier transit of equipment or machinery proximate to the row of plants.

The system comprises means of anchoring the canopy 1 to the poles 9 in an area that is spaced downward from the top of the poles 9 so that the canopy 1 is resting on the top wire 10.

More specifically, the anchoring means are constituted by spikes 15 screwed into the corresponding plates 12. The canopy 1, which is supported on the plates 12 and on the top wire 10 that is tensioned between the poles 9, at the spikes 15, has adapted holes 21 that are passed through by the threaded lower end of the spikes 15 which mates with threaded seats that are defined in the plates 12. Each spike 15, further, has, proximate to its lower end, a pan 22, which overlaps a portion of the channel 13 thus retaining the top wire 10 within it.

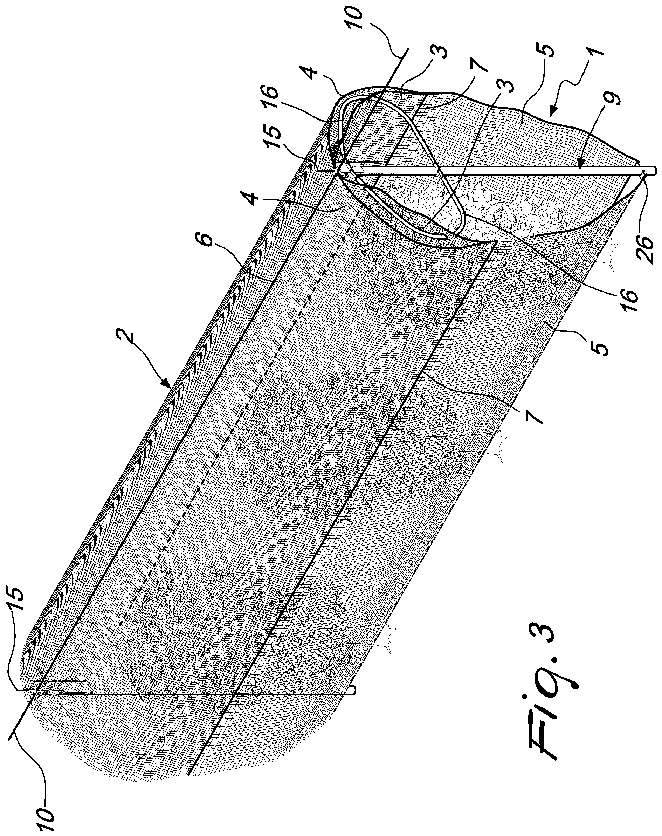

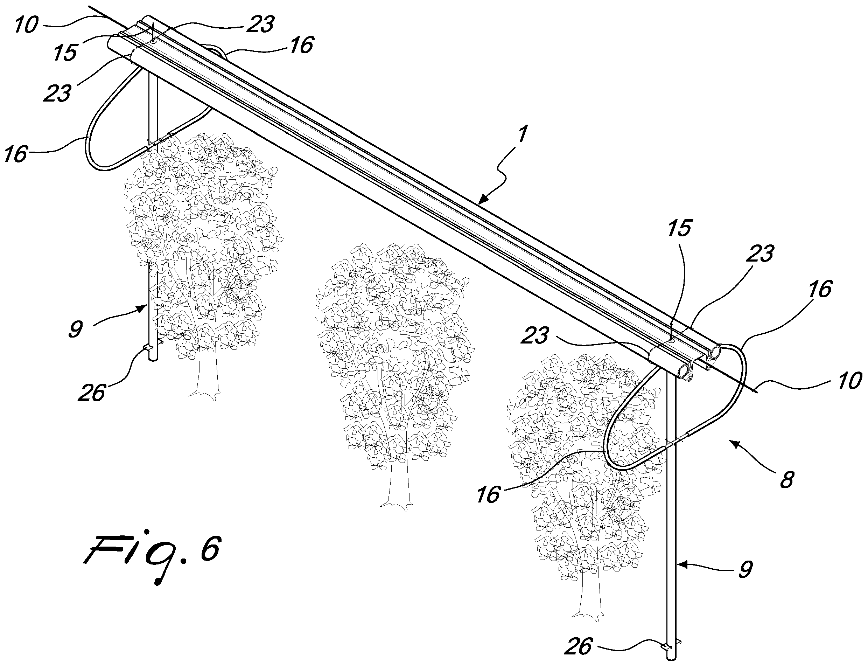

The canopy 1 can be arranged in an extended position, in which it is extended along the sides of the row of plants, as shown in Figures 3, 4 and 5, or in a gathered position, in which it is at least partially wound or wadded starting from its lower end toward its upper end, as shown in Figures 6, 7 and 8. The system is provided with retention means that are associated with the poles 9 and which can engage, from the inside outward, with the canopy 1 in order to retain it in the gathered position.

More specifically, the retention means comprise, for each pole 9, at least two retention elements 23 that can engage, independently of each other, from the inside outward, respectively with the flap of the canopy 1 that can be extended along one side of the row of plants to be protected and with the flap of the canopy 1 that can be extended along the opposite side of the row of plants to be protected in order to retain the corresponding flap of the canopy 1 in a gathered position proximate to the upper end of the canopy 1.

Each one of the retention elements 23 has an elongated shape and can be folded to wrap it, from the inside outward, around a flap of the canopy 1 in the gathered position. Each one of the retention elements 23 is connected, with one of its ends, to one of the poles 9 and can be arranged in an inactive condition, in which it is arranged between the corresponding pole 9 and the canopy 1 extended along the side of the row of plants to be protected, or in an active condition, in which it is wrapped, from the inside outward, around the canopy 1 in a gathered position proximate to its upper end and is engaged, with its other end, with the corresponding pole 9. In the embodiment shown, the retention elements 23 are constituted by straps which are provided, along their extension, with slots 24 that can be engaged with a hook 25 of the plate 12 and with the spike 15.

The inner layer 3, which is passed through by the spacer arms 16, can slide along the spacer arms 16 while the outer layer 4 of the first band 2 and the second band 5 can be wound or gathered and can be retained by the retention elements 23 above the spacer arms 16.

Conveniently, proximate to the lower end of the poles 9, there are coupling elements 26 for the lower end of the second band 5 of the canopy 1 so as to retain the canopy 1 in the extended position.

The installation of a system of this type is done by arranging the poles 9 substantially aligned along the row of plants to be protected, inserting the top wire 10 in the channel 13 of the plates 12 which are fixed to the upper end of the body 11 of the poles 9, and tensioning the top wire 10. Subsequently, the canopy 1 is rested, with a central region of the first band 2, on the top wire 10 and is locked to the top of the body 11 of the poles 9 by way of the spikes 15.

The spacer arms 16 are inserted through the holes 17 of the inner layer 3 of the first band 2 and are fixed, with their upper end only or with both of their ends, to the poles 9.

When protection of the row of plants is required, the canopy 1 is extended downward and engaged with the coupling elements 26 that are located proximate to the lower ends of the poles 9, as shown in Figures 3, 4 and 5.

When it is necessary to access the plants in the row of plants, the canopy 1 is wound or wadded upward by sliding, along the spacer arms 16, the inner layer 3 of the first band 2. The canopy 1, thus wound or wadded, will then be above the spacer arms 16 except for a part of the inner layer 3 of the first band 2 which remains wadded below the spacer arms 16. The canopy 1 is held in the gathered position by way of the retention elements 23 which are engaged, with one of their ends, to the hooks 25 of the plates 12 and are engaged, with their other ends, to the corresponding spike 15, as shown in Figures 6, 7 and 8.

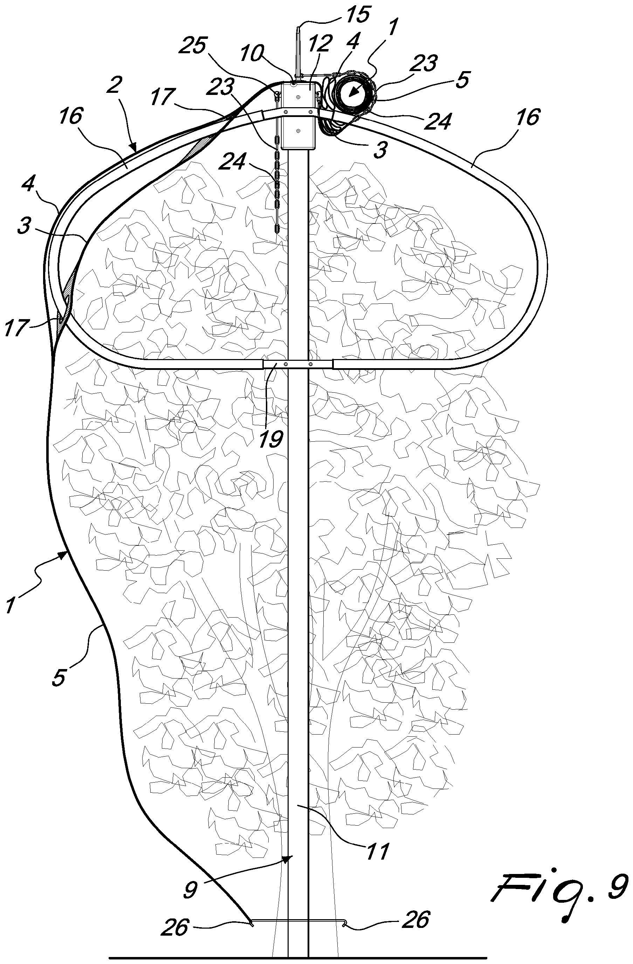

It should be noted that the two side flaps of the canopy 1 can be brought, independently of each other, in the extended position or in the gathered position. Figure 9 shows the possibility of supporting one of the two flaps in the gathered position, while the other flap remains in the extended position.

The canopy 1, in the extended position, effectively performs an action of protection against rain, against hail and against insects.

In particular, with regard to protection against rain, the canopy 1 of the system according to the invention is particularly effective in that, owing to the fact that the first band 2 is composed of two micro-perforated layers 3, 4 that are separate from each other, and preferably spaced apart, prevents the rain from penetrating through the two layers 3, 4 and, at the same time, allows the passage of air and water vapor through the layers 3, 4 which effectively prevents the accumulation of heat and humidity under the canopy 1.

More specifically, the outer layer 4 of the two layers 3, 4 that make up the first band 2 of the canopy 1 performs the function of shattering the droplets of rain and of absorbing most of the kinetic energy of such droplets. Then, the inner layer 3 of the two layers 3, 4 that make up the first band 2 of the canopy 1 performs the function of retaining and collecting the shattered raindrops that should pass through the outer layer 4 and conveying them toward the second band 5 thus preventing them from reaching the plants. Although the two layers 3, 4, which are preferably spaced apart from each other, prevent the passage of water, they allow the passage of air and water vapor and thus they prevent the formation of a pall of heat below the canopy 1 and the accumulation of humidity, thus keeping the plants dry and in optimal conditions.

Although what has been described and illustrated is the preferred use of the canopy according to the invention, in a system for protecting a single row of plants, the canopy according to the invention can also be used with advantage in other types of systems, optionally also in combination with other types of protection nets against hail and insects. In the latter case, the canopy can be limited to the first band 2 and thus the second band 5 can be absent.

In practice it has been found that the canopy according to the invention fully achieves the set aim in that it ensures an adequate level of protection of plants against water, hail and insects while preventing the accumulation of heat and of humidity below the canopy and thus ensuring optimal conditions for the plants to be protected.

The canopy, thus conceived, is susceptible of numerous modifications and variations, all of which are within the scope of the appended claims. Moreover, all the details may be substituted by other, technically equivalent elements.

In practice the materials employed, provided they are compatible with the specific use, and the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A canopy (1) for protecting plants against water, hail and insects, **characterized in that** it comprises at least one first band (2), with a water-resistant protective function, composed of at least two micro-perforated layers (3, 4), which are superimposed and separate from each other.

2. The canopy (1) according to claim 1, **characterized in that** said two layers (3, 4) of the first band (2) are each constituted by a mesh fabric.

3. The canopy (1) according to claims 1 and 2, **characterized in that** said two layers (3, 4) of the first band (2) have at least 18 warp threads per centimeter and at least 8 weft threads per centimeter.

4. The canopy (1) according to one or more of the preceding claims, **characterized in that** said two layers (3, 4) of the first band (2) are composed of threads that have a diameter comprised substantially between 0.15 mm and 0.30 mm.

5. The canopy (1) according to one or more of the preceding claims, **characterized in that** it comprises at least one second band (5), which is connected to at least one side of said first band (2), said at least one second band (5) being constituted by a mesh fabric with a larger mesh size than the mesh size of said two layers (3, 4) of the first band (2).

6. The canopy (1) according to one or more of the preceding claims, **characterized in that** it comprises two second bands (5), which are connected to two opposite sides of said first band (2).

7. The canopy (1) according to one or more of the preceding claims, **characterized in that** said first band (2) is sewn to said at least one second band (5).

8. The canopy (1) according to one or more of the preceding claims, **characterized in that** it is made of synthetic material.

## Patentansprüche

1. Ein Baldachin (1) zum Schutz von Pflanzen vor Wasser, Hagel und Insekten, **dadurch gekennzeichnet, dass** er mindestens einen ersten Bund (2) mit wasserfester Schutzfunktion umfasst, bestehend aus mindestens zwei mikroperforierten Schichten (3, 4) die übereinander gelegt und voneinander getrennt sind.

2. Der Baldachin (1) gemäß Anspruch 1, **dadurch gekennzeichnet, dass** die zwei Schichten (3, 4) des ersten Bundes (2) jeweils aus einem Maschengewebe bestehen.

3. Der Baldachin (1) gemäß den Ansprüchen 1 und 2, **dadurch gekennzeichnet, dass** die beiden Schichten (3, 4) des ersten Bundes (2) mindestens 18 Kettfäden pro Zentimeter und mindestens 8 Schussfäden pro Zentimeter haben.

4. Der Baldachin (1) gemäß einem oder mehreren der obigen Ansprüche, **dadurch gekennzeichnet, dass** die beiden Schichten (3, 4) des ersten Bundes (2) aus Fäden bestehen, die einen Durchmesser haben, der im Wesentlichen zwischen 0,15 mm und 0,30mm liegt.

5. Der Baldachin (1) gemäß einem oder mehreren der obigen Ansprüche, **dadurch gekennzeichnet, dass** er mindestens einen zweiten Bund (5) umfasst, der an mindestens einer Seite des ersten Bundes (2) befestigt ist, wobei der mindestens eine zweite Bund (5) aus einem Maschengewebe mit einer Maschengröße besteht, die größer ist als die Maschengröße der zwei Schichten (3, 4) des ersten Bundes (2).

6. Der Baldachin (1) gemäß einem oder mehreren der obigen Ansprüche, **dadurch gekennzeichnet, dass** er zwei zweite Bünde (5) umfasst, die mit zwei gegenüberliegenden Seiten des ersten Bundes (2) verbunden sind.

7. Der Baldachin (1) gemäß einem oder mehreren der obigen Ansprüche, **dadurch gekennzeichnet, dass** der erste Bund (2) an den mindestens einen zweiten Bund (5) angenäht ist.

8. Der Baldachin (1) gemäß einem oder mehreren der obigen Ansprüche, **dadurch gekennzeichnet, dass** er aus synthetischem Material besteht.

## Revendications

1. Filet (1) pour protéger des végétaux contre la pluie, la grêle et les insectes, **caractérisé en ce qu'**il comporte au moins une première bande (2), à fonction de protection contre la pluie, composée d'au moins deux couches microperforées (3, 4) superposées l'une à l'autre et séparées l'une de l'autre.

2. Filet (1) selon la revendication 1, **caractérisé en ce que** lesdites deux couches (3, 4) de la première bande (2) sont constituées chacune par un tissu maillé.

3. Filet (1) selon les revendications 1 et 2, **caractérisé en ce que** lesdites deux couches (3, 4) de la première bande (2) ont au moins 18 fils de chaîne par centimètre et au moins 8 fils de trame par centimètre.

4. Filet (1) selon une ou plusieurs des revendications précédentes, **caractérisé en ce que** lesdites deux couches (3, 4) de la première bande (2) sont composées de fil d'un diamètre sensiblement compris entre 0,15 mm et 0,30 mm.

5. Filet (1) selon une ou plusieurs des revendications précédentes, **caractérisé en ce qu'**il comporte au moins une seconde bande (5), laquelle est reliée à au moins un côté de ladite première bande (2), ladite au moins une seconde bande (5) étant constituée d'un tissu maillé à mailles de dimensions plus grandes que celles des mailles desdites deux couches (3, 4) de la première bande (2).

6. Filet (1) selon une ou plusieurs des revendications précédentes, **caractérisé en ce qu'**il comporte deux secondes bandes (5), lesquelles sont reliées à deux côtés opposés de ladite première bande (2).

7. Filet (1) selon une ou plusieurs des revendications précédentes, **caractérisé en ce que** ladite première bande (2) est cousue à ladite au moins une seconde bande (5).

8. Filet (1) selon une ou plusieurs des revendications précédentes, **caractérisé en ce qu'**il est en matière synthétique.
